# EUROPEAN PATENT SPECIFICATION

(11) **EP 0 759 961 B1**
(45) Date of publication and mention of the grant of the patent: **17.02.1999**
(21) Application number: 95916795.8
(22) Date of filing: 28.04.1995
(51) Int. Cl.: C09K 21/02, C09K 21/14

(54) **INTUMESCENT COMPOSITIONS**
INTUMESZIERENDE ZUSAMMENSETZUNGEN
COMPOSITIONS INTUMESCENTES

(30) Priority: 09.05.1994 GB 9409171
(43) Date of publication of application: 05.03.1997
(73) Proprietor: ENVIRONMENTAL SEALS LIMITED, Nr. Dover, Kent CT15 7JG (GB)
(72) Inventor: WARD, Derek, Alfred, Dover, Kent CT15 5HR (GB)
(74) Representative: Hutchins, Michael Richard
(86) International application number: GB9500977
(87) International publication number: WO9530724

(56) References cited:
- EP-A- 0 508 751
- EP-A- 0 519 863
- WO-A-91/11498
- WO-A-94/11455
- DE-A- 4 135 678

## Description

The present invention relates to an intumescent composition containing an intumescent substance and a particulate ceramic material, methods of making such compositions and to fire seals formed from such compositions.

International Patent Application WO-A-91 11498 discloses intumescent products containing one or more exfoliating laminar mineral materials such as exfoliating graphite, and one or more intumescent char-forming materials in combination with at least one binder.

Our earlier British Patent Application No. 9207659.5 (Publication No. 2254609), and its European equivalent EP-A-0 508 751, describe the use of ceramic fibres in the preparation of intumescent fire seal products. Commercially available ceramic fibre, such as the ceramic fibre described in GB 2254609, contains a proportion of non-fibrous ceramic material in particulate form, which we refer to as "shot". In processes such as the process described in GB 2254609, the particulate ceramic shot tends to become separated from the fibrous materials and accumulates as waste which is usually simply discarded. It has now been found that the ceramic shot material can be used in intumescent compositions, and in certain instances is advantageous with regard to the ceramic fibre used hitherto.

A problem facing architects and building engineers lies in preventing the spread of fire along service conduits and openings in walls and ceilings through which pipes and other service lines must pass. It is conventional when providing an opening in a wall or ceiling for a service pipe (e.g. water or gas pipe) to line the opening with a metal sleeve but such an arrangement does give rise to problems from a fire protection viewpoint. As a result of the thermal expansion of metal pipes, particularly those carrying hot water, the metal sleeve through which the pipe must pass is usually of a size to provide only a loose fit around the pipe, with the consequence that in a fire situation, flames, smoke and hot gases can pass along the gap between the outer wall of the pipe and the inner wall of the sleeve. The problem is exacerbated when a single sleeve is used to define an opening through which several pipes are inserted, thereby leaving an even greater gap through which fire may pass.

One object of the present invention is to overcome the aforesaid problems, and it has been found that a sleeve for lining an opening in a wall may advantageously be formed from a mixture of the ceramic shot material described hereinabove in combination with an intumescent substance such as sodium silicate or exfoliating graphite.

Accordingly, in a first aspect, the invention provides a tubular sleeve for lining an opening in a wall or ceiling, said sleeve being of a size to permit one or more pipes to be inserted therethrough; the sleeve being formed from an intumescent seal material comprising a mixture of a particulate ceramic material containing at least 75% by weight of a non-fibrous ceramic shot; an intumescent substance; and a binder.

The ceramic particulate material preferably contains at least 85% by weight of the non-fibrous ceramic shot material, and more preferably at least 95% by weight of the non-fibrous ceramic shot.

The intumescent substance is typically a solid intumescent substance and can be for example an alkaline metal silicate such as sodium silicate, or exfoliating graphite. Preferably the intumescent substance is exfoliating graphite. The intumescent substance may form up to 40% by weight of the total weight of the intumescent substance and particulate ceramic material, but preferably it is less than 30% by weight, and typically between and 5% and 25% by weight of the said total weight.

The amount of binding agent employed is an amount effective to bind the particulate ceramic material and the intumescent material to form a coherent mouldable mass. For example, the binding material may form up to about 20% by weight relative to the total weight of the particulate ceramic material and intumescent material. The binder is preferably an organic polymeric binder, and may be for example a polyacrylate, polyacetate or polyvinyl alcohol binder. Alternatively, the binder may be an elastomeric binder, for example a latex binder.

The tubular sleeve is preferably flexible.

An intumescent sleeve of the present invention can be formed by mixing together an aqueous slurry or paste formed from the particulate ceramic material, intumescent substance and binding agent and then moulding the slurry about a cylindrical former, for example a wooden mandrel. The wall of the sleeve may be built up in layer form by the application of successive layers of the slurry, or it may be formed in a single application. Where necessary, an external moulding or wrapping means may be used to shape the surface of the sleeve to the correct shape. The slurry is warmed gently in an oven in order to cure the binding agent, the temperature being carefully chosen so as not to cause premature intumescence of the intumescent agent. Following the heating step, the wooden mandrel is removed to leave a length of sleeve which is then cut to a desired length.

In use, a hole is formed in a wall or ceiling and a length of the flexible intumescent sleeve of the present invention inserted therethrough. One or more pipes carrying services such as hot and cold water may then be inserted through the sleeve during the construction of, or fitting out of, a building. In the event of fire, the action of heat on the intumescent substance causes it to expand to many times its former size thereby to block and seal the opening between the walls of the pipes, and the opening in the building wall or ceiling in order to prevent the passage therethrough of fire, fire gases and smoke.

## Claims

1. A tubular sleeve for lining an opening in a wall or ceiling, said sleeve being of a size to permit one or more pipes to be inserted therethrough; the sleeve being formed from an intumescent seal material comprising a mixture of a particulate ceramic material containing at least 75% by weight of a non-fibrous ceramic shot; an intumescent substance; and a binder.

2. A tubular sleeve according to Claim 1 wherein the ceramic particulate material contains at least 85% by weight of the non-fibrous ceramic shot material.

3. A tubular sleeve according to Claim 2 wherein the intumescent seal material contains at least 95% by weight of the non-fibrous ceramic shot.

4. A tubular sleeve according to any one of the preceding Claims wherein the intumescent substance is a solid intumescent substance.

5. A tubular sleeve according to Claim 4 wherein the intumescent substance is an alkaline metal silicate or exfoliating graphite.

6. A tubular sleeve according to any one of the preceding claims which is flexible.

7. The use of a tubular sleeve according to any one of the preceding claims for providing an intumescent seal about service pipes passing through an opening in a wall.

## Patentansprüche

1. Mantelrohr zum Auskleiden einer Öffnung in einer Wand oder Decke, jenes Mantelrohr hat eine solche Größe, daß ein oder mehrere Rohre dort hindurchgeführt werden können; das Mantelrohr ist aus einem feuerhemmenden Verschließmaterial geformt, das eine Mischung aus einem zerstückelten Keramikmaterial, das mindestens 75 Gewichtsprozente eines nichtfaserigen keramischen Korns (Schrots), eine feuerhemmende Substanz und einen Binder enthält.

2. Mantelrohr nach Anspruch 1, wobei das zerstückelte Keramikmaterial mindestens 85 Gewichtsprozente von dem nichtfaserigen Keramik-Schrotmaterial enthält.

3. Mantelrohr nach Anspruch 2, wobei das feuerhemmende Verschließmaterial mindestens 95 Gewichtsprozente von dem nicht faserigen Keramik-Schrot enthält.

4. Mantelrohr nach einem der vorstehenden Ansprüche, wobei die feuerhemmende Substanz eine feste feuerhemmende Substanz ist.

5. Mantelrohr nach Anspruch 4, wobei die feuerhemmende Substanz ein Alkalimetallsilikat oder ein Blähgrafit ist.

6. Mantelrohr nach einem der vorstehenden Ansprüche, welches flexibel ist.

7. Der Gebrauch eines Mantelrohres nach einem der vorstehenden Ansprüche zur Schaffung eines feuerhemmenden Verschlusses um Versorgungsrohre, die durch eine Wandöffnung führen.

## Revendications

1. Gaine isolante tubulaire pour le garnissage d'une ouverture dans un mur ou un plafond, ladite gaine ayant une dimension permettant l'insertion dans la gaine d'une ou plusieurs conduites; la gaine étant formée à partir d'un matériau d'étanchéité intumescent comprenant un mélange d'un matériau céramique particulaire contenant au moins 75% en poids d'un produit moulé céramique non fibreux, une substance intumescente et un liant.

2. Gaine selon la revendication 1, caractérisée en ce que le matériau particulaire céramique contient au moins 85% en poids d'un matériau moulé céramique non fibreux.

3. Gaine selon la revendication 2, caractérisée en ce que le matériau d'étanchéité intumescent contient au moins 95% en poids d'un produit moulé céramique non fibreux.

4. Gaine selon l'une quelconque des revendications précédentes, caractérisée en ce que la substance intumescente est une substance intumescente solide.

5. Gaine selon la revendication 4, caractérisée en ce que la substance intumescente est un silicate de métal alcalin ou du graphite exfolié.

6. Gaine selon l'une quelconque des revendications précédentes, caractérisée en ce qu'elle est flexible.

7. Utilisation d'une gaine selon l'une quelconque des revendications précédentes pour mettre en oeuvre un matériau d'étanchéité intumescent destiné aux lignes de raccordement passant en travers d'une ouverture dans un mur.
